# EUROPEAN PATENT SPECIFICATION

(11) **EP 0 942 040 B1**
(45) Date of publication and mention of the grant of the patent: **01.10.2003**
(21) Application number: 98104152.8
(22) Date of filing: 09.03.1998
(51) Int. Cl.: C08L 3/02, C08L 23/06, C08J 5/18

(54) **A polymeric plastic film**
Kunststoff-Folie
Feuille en matière plastique

(43) Date of publication of application: 15.09.1999
(73) Proprietor: NATIONAL RESEARCH DEVELOPMENT CORPORATION, New Delhi 110 048 (IN)
(72) Inventor: Saroj Kumar Nanda, Sreekaryam, Trivandrum 695077 (IN)
(74) Representative: von Füner, Nicolai, Dr.

(56) References cited:
- EP-A- 0 032 802
- US-A- 3 907 726
- US-A- 5 654 353
- US-A- 5 696 186
- WILLIAM M. DOANE: "USDA Research on Starch-Based Biodegradable Plastics" STARCH STARKE., vol. 44, no. 8, 1 August 1992, WEINHEIM DE, pages 293-295, XP000292645
- PATENT ABSTRACTS OF JAPAN vol. 17, no. 705 (M-1534), 22 December 1993 & JP 05 245906 A (SUMITOMO ELECTRIC IND LTD), 24 September 1993, & DATABASE WPI Week 9343 Derwent Publications Ltd., London, GB; AN 339334

## Description

The present invention relates to a novel ecologically safe plastic film and a novel process for the preparation of these plastic films. The present invention resides in the biodegradable plastic films which degrade faster than the conventional plastics. The main embodiment of the present invention resides in the use of more than one polysaccharide as major components which facilitate expedient decomposition of the plastic films.

Plastics are one of the largest consuming product in the world. Plastics are being used for packaging of all sorts of goods including food products and agricultural products. In fact, concern over the disposal of enormous tonnage of plastics packaging materials has led to search for biodegradable and/or photodegradable plastics suitable for various kinds of packaging.

Plastics find potential use in nursery bags, mulching, packaging and storage material, irrigation and water management, green house pipes and similar applications are found in different industries.

Mulching is a practice in which the cultivated land is covered with suitable materials such as dry leaf, straw, ash, saw dust and the like. It helps in preventing the evaporative losses of soil moisture, reduces weed growth and insulates the soil from varying temperatures of the environment. The plastic films, especially LDPE or LLDPE, are now replacing the conventional mulching because of their effectiveness and convenience. In this method around 30-60% of cultivated area are covered with a polyethylene film, usually 30-150 microns thin, and the plant grows through the pores made on this film. Plastic films find use in the mulching and there is much scope for this technique for the growth of crops such as grapes, tomatoes, lettuce, chilies, beans, maize, tobacco, pine apple, nursery stock flowers and the like. Interest in development of photodegradable or biodegradable plastic films with short service lifetimes has been growing to eliminate the removal and disposal costs and inconvenience associated with the conventional mulch films(Srivastava et al., 1988).

Petroleum being a non replenishable source of energy proves to be highly expensive as the source of plastic industry. The steep rise in price of petroleum also has an adverse effect on the price of plastics. The global shortage of crude oil has also led to severe competition between fuel for energy and feedstock for petrochemicals. Uncertainty of their supply, and even the availability of crude oil has prompted research activities to find alternative feedstock for polymers. The search for a replenishable source of energy ended on polysaccharide as being a potential source for plastics. Polysaccharides are worlds most abundant renewable resources and available enough to serve the polymeric needs besides their conventional applications. One natural polymer, i.e., starch has piqued the interest of the research workers not only because it is a renewable source but also for its potential to impart biodegradability to the fabricated material.

Starch is one of the major form in which the carbohydrates are stored in the plant kingdom. Commercially starch is produced from grains such as corn or maize, wheat, rice, milo or sorghum and from roots and tubers such as cassava or tapioca, potato, sweet potato and the like (Whistler, 1984).

Besides being an abundantly present polymer, starch is also one of the lowest priced commodity and most abundant commodity. It is available at low costs making it an attractive industrial raw material. Besides their utilization as food or feed, starch derivatives find various applications in adhesives, paper, textile industry and for manufacturing a number of sweeteners such as glucose, dextrose, high fructose syrup and the chemicals such as ethanol, butanol, acetone and itaconic acid (Balagopalan et al.,1988)

Chemically starch is a polymeric carbohydrate consisting of ∝-D-glucopyranose or anhydroglucose units connected together through ∝-linkages. This natural polymer is a heterogeneous material consisting of two major fractions, viz. the linear amylose and the branched amylopectin. (Glass,1986)

Aqueous dispersion of starch in hot water possess unique film forming behavior. However, such films cast from dispersion of starch in hot water are brittle and highly sensitive to water. High amylose content favours film formation while brittleness and low strength of the starch films is to be attributed to the amylopectin content. Starch derivatives and graft copolymers though compatible with thermoplastic resins is not industrially lucrative due to high cost and processing difficulties (Protzman and Powers, 1986).

The abundance of hydroxyls imparts hydrophilic properties to starch giving it an affinity for moisture. However, due to the alpha linkages the backbone of the starch molecule tends to form helices so that segments of the polymer orient themselves in a parallel fashion whereby the O atoms and the H atoms are attracted to each other with intramolecular hydrogen bonds. As a result the affinity of the polymer for water is reduced. Branched nature of amylopectin reduces its tendency to become oriented closely enough to permit significant levels of H bonding(Glass,1986).

Starch granules are insoluble in cold water. They are made of amylose and amylopectin molecules and form a micellar associated by hydrogen bonding either directly or through hydrate bridges. When exposed to high humidities or when suspended in water the granules absorb water and undergo limited reversible swelling. However, when a slurry of starch in water is heated above a critical temperature, hydration and profound irreversible swelling occur. This collective process of the disruption of molecular order within the granule is known as gelatinisation(Zoble, (Zoble,1984). Weakening of the hydrogen bonds allows the penetration of water and as hydration occurs the molecules start to form helices or coils causing the granules to imbibe water and swell to many times their original volume. In any population of starch granules there would be some granules that gelatinize at lower and some at higher temperature. Thus macroscopic gelatinisation often occurs over a temperature range.

The structure of starch is :

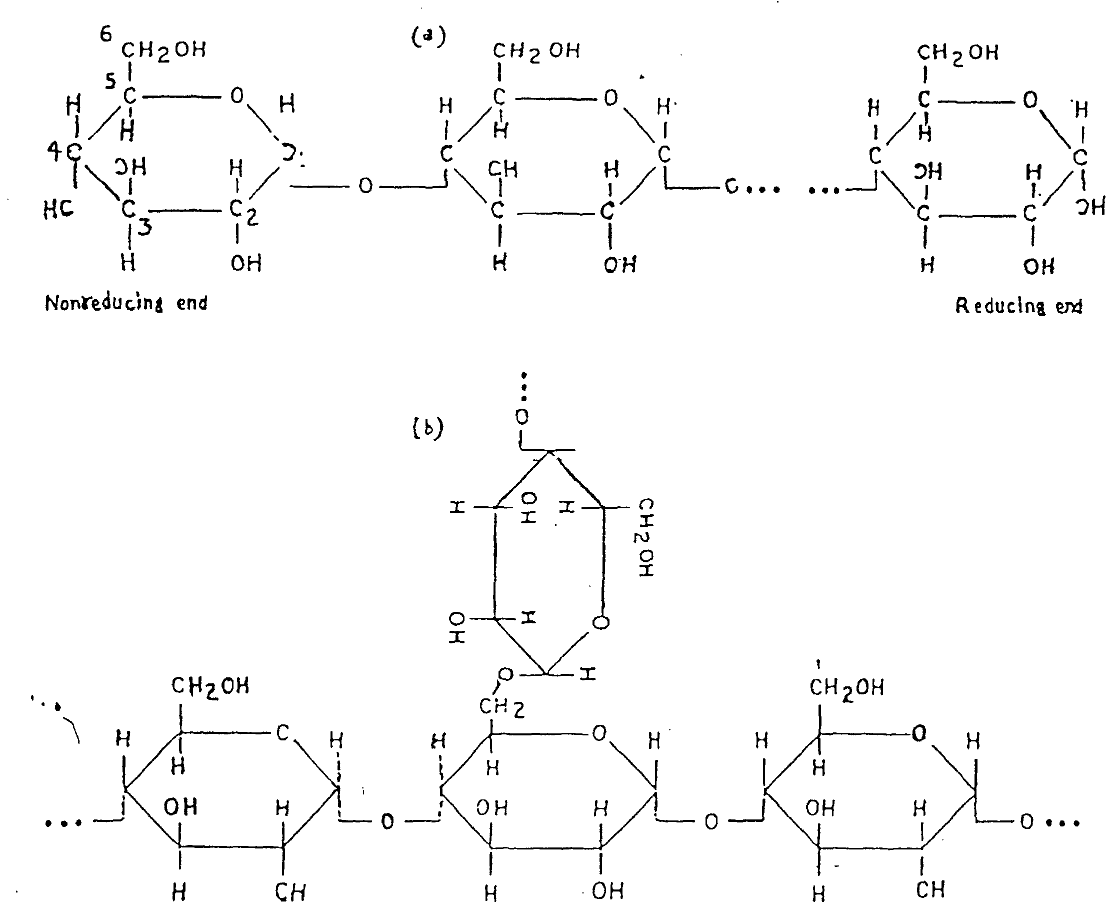

Gelatinization property of starch helps in the film forming properties of starch. However, these properties differ with the increasing amount of starch present in the polymeric film formation.

Retrogradation is a problem encountered by the starch containing polymeric plastic films. It is the formation of an insoluble precipitate through the association of poorly soluble linear fraction present in starch solutions. When starch is solubilised at low solids, amylose molecules diffuse and upon cooling/lowering the temperature, orient and crystallize from the solution. However, if the concentration is too high or the temperature too low, diffusion and crystallization of amylose are hindered resulting into a three dimensional gel network instead of crystallised form and the starch is said to retrograde. Apart of this, the starch aggregates progressively and finally forms an insoluble microcrystalline precipitate (French, 1950). Retrogradation is favoured by high concentrations, low temperatures, neutral pH, absence of branching and low degrees of polydispersity. Retrogradation must therefore be avoided.

Starches have been developed to overcome the shortcomings of the native starch to tailor its physical and chemical properties as desirable for industrial applications. Lack of free flowing properties of starch granules, insolubility in cold water, uncontrolled viscosity after cooking and the tendency of starch solutions to form opaque gels are the apparent shortcomings of raw starch which limit its usefulness in many commercial applications(Wurzburg, 1986).

These modified starches include acid modified starch hypochlorite oxidised starch, periodate oxidised or dialdehyde starch and crosslinked starch. Starch ethers (Hydroxy ethyl starch, hydorxy propyl starch, carboxymethyl starch, cationic starches, etc.) and starch esters (Starch acetates, starch phosphates, starch sulphates, starch xanthate, etc.) are the other derivatives of starch.

The mechanical properties of films from common starches are influenced by the nature of two molecular species present. Higher amylose content favours film formation while brittleness and low strength of the starch film formation is be attributed to the higher content and the irregular, branched chain structure of amylopectin(Protzman & Powers,1968). The branched molecules can not orient and pack as closely as linear molecules.

Water acts as a plasticizer for amylose. It weakens the intermolecular forces. The effects of solubilization temperature and casting temperature had been studied and amylose films having excellent properties have been prepared by dissolving amylose at 130° C casting the aqueous onto a support having at least 10° C less than the gelation temperature of the amylose solution and drying the amylose gel at a temperature above the gelatinization temperature(Protzman,et al.,1967). The resulting film had initially a much lower degree of hydrogen bonding than amylose film prepared at room temperature. It also has a less tendency to swell on exposure to water and appeared to be more dense than amylose films.

These properties of the starch have led to development of starch based polymeric films which have been found to be biodegradable. To summarise it can be said that the first generation of starch based biodegradable plastics contain a small amount of either starch or a starch graft copolymer or a modified starch mostly in the form of inert or a reactive filler. However, the biodegradability of the starch based plastic films thus formed was found to be minimally less than the plastics formed from petroleum industry. The need has therefore been felt for starch based polymers suitable for the commercial set up of plastics manufacturers and at the same time the process should incorporate maximum amount of starch to bring down the raw material cost involved while achieving greater biodegradability.

Plastics denote a class of polymers that are solid in the finished stage but are shaped by melt flow or by casting from solution, during their manufacture or processing. Normally made from petrochemicals, the range of plastics and their uses are wide enough to encompass almost all facets of daily life(Durairaj,1990). However, the potential of plastics is yet to be fully exploited.

EP-0 032 802 discloses a flexible, self-supporting and biodegradable film composition characterized in that it comprises a composite of
1) a starchy material, 2) ethylene acrylic acid copolymer at least half of which is in the form of its ammonium salt, and 3) polyethylene.

According to EP-0 032 802, the starchy materials should be partially or completely gelatinized. Gelatinization may be effected by any known procedure such as heating in the presence of water or an aqueous solution at temperatures of above 60°C until the starch granules are so swollen and disrupted that they form a smooth viscous dispersion-in the water.

Furthermore, the use of a neutralizing agent is required which is preferably ammonia in either anhydrous or aqueous form.

Instead of ammonia it is possible to use as neutralizing agents simple amines which are substantially similar to ammonia in their tendency to form salts with organic acids.

US-3 907 726 discloses a synthetic resin molded object that is biologically disintegrable, made of a uniformly blended mixture consisting essentially of:
A. from 1 to 10 percent by weight of fine particles of an organic substance that is decomposable by soil microorganisms or activated sludge microorganisms,
B. from 40 to 90 percent by weight of particles of inorganic filler selected from the group consisting of diatomaceous earth, calcium carbonate, white carbon, talc, clay, calcium sulfate hemihydrate, anhydrous calcium sulfate and calcium sulfite, and
C. the balance is synthetic resin selected from the group consisting of polyolefins and blends of polyolefins with polyvinyl acetate, the amount of said synthetic resin being effective to provide the structural integrity of the molded object.

According to US-3 907 726, as the organic substance to be added to the resin there are varieties of substances such as starch, processed starch (e.g. starch processed with fat), mannitol, lactose, cellulose, lignin, carboxymethyl cellulose (CMC), casein.

US-5 654 353 discloses a biodegradable starch resin composition comprising:
(a) 30-80% by weight of modified starch concentrate having the following composition:
   50-85% by weight of starch;
   4-16% by weight of mixing promoter;
   10-30% by weight of plasticizer;
   1-4% by weight of alkaline additive;
   0.5-1.5% by weight of biodegradation accelerator;
(b) 5-20% by weight of copolymer of ethylene and acrylic acid;
(c) 10-60% by weight of polyvinyl resin which is a mixture of conventional polyvinyl resin of low density polyethylene (LDPE) and high density polyethylene (HDPE) with a special polyvinyl resin with a density in the range of 0.86-0.90 g/cm³, a melt index in the range of 2-5 g/10 min. and a melting temperature in the range of 80-100°C.

According to US-5 654 353 the mixing promoter includes two constituents, one is a copolymer of ethylene and acrylic acid (EAA). The other constituent is epoxy vegetable oil such as epoxy soybean oil, epoxy corn oil. The plasticizer is glycol, propanediol and the low molecular weight condensate thereof (MW<400), glycerin and sorbitol. The alkaline additive is hydroxy compounds of alkali metals such as sodium hydroxide and potassium hydroxide, urea and triethanolamine. The biodegradation accelerator is a bioactive agent such as *Bacillus subtilis,* including *Bacillus subtilis* BF7864 (available from Central China Agricultural University) which has the property of high temperature resistance and stability of storage.

Die Stärke, Vol. 44, No. 8, p. 293-295 discloses that for producing extrusion-blown films and injection molded articles containing 50% and more of starch one basic approach comprises the compounding of blends of starch with other polymers, especially biodegradable ones, and forming into films or injection molding into articles for evaluation.

Compounding of starch with other polymers and additives is most effectively accomplished by extrusion. Both single and twin screw extrusion have been employed to obtain a uniform melt of the components. Typically, the compound is extruded as strands which are chopped into pellets for processing into extrusion-blown films or for injection molding. In a typical preparation of starch-EAA-PE composite, starch is blended with powdered PE and EAA and an aqueous solution of urea and ammonium hydroxide. A typical formulation contains 40% starch, 25% EAA, 25% PE and 10% urea as the solid components. About eight parts of concentrated ammonium hyroxide per 100 parts of solids are added as plasticizer.

Patent Abstracts of Japan, Vol. 17, No. 705 (M-1534) & JP-A-5245906 disclose a plastic extruder wherein a screw which extrudes a plastic material to a metal mold exists inside an extruder cylinder, and a screen mesh for screening a foreign substance in extrusion materials and a breaker plate for holding the mesh are arranged at a material outlet in front of the screw. In such an extruder, an inner diameter (d) of the extruder cylinder is enlarged at an extruding outlet, and the screen mesh and the breaker plate of which a material passing part diameter D is made larger than the inner diameter (d) are arranged at that position. Thereby, a material passing quantity per unit area of the mesh is decreased and reduction of abrasion loss of the mesh is achieved.

Although the composition comprising starch degrades at a faster rate than the conventionally known plastic films, it would still be preferred if the degradation time could be decreased to a minimum possible time. The polysaccharides of low molecular weight belonging to the general class called oligosaccharides have been found as a major source of food for the microbes and the microorganisms. However, no concrete technology for the plastic industry comprising oligosaccharides has been known in the plastic industry.

There is also a need for an improved process for the preparation of these polysaccharide-based polymeric films.

The present invention introduces a novel polymeric film and an improved process for preparing a polymeric film comprising a combination of polysaccharides as the main component. Starch forms one of the major components and the other component is selected among oligosaccharides. The present invention specifies the exact formulations incorporating optimum amounts of coupling agents, stabilizing agents, gelatinizing agents and plasticizing agents to be taken along with starch, the optimum operating conditions for the successful manufacture of starch-based plastics by compounding, granulating and extrusion blowing the compositions; and the additive to enhance the biodegradation of the processed plastic product. Besides starch as the main component, the present invention also comprises oligosaccharides as the main component.

Accordingly, the present invention relates to a polymeric plastic film comprising 10-60% starch, 5-20% of a coupling agent, 20-90% of a stabilizing agent which is selected among the class of water-insoluble synthetic polymers, said components adding up to 100%, and water in an amount so that the starch is moistened enough to smear itself uniformly around the granules of the stabilizing agent and the coupling agent, 20-60% of urea w/w of starch and water, and 2-10 phr of oligosaccharides.

### phr means parts per hundred of resin.

Furthermore, the present invention relates to a process for the preparation of said polymeric plastic film comprising:
mixing the components of the composition;
compounding the mixture in a compounder to form a molten strand;
solidifying the said molten strand by decreasing the temperature;
cutting the said solid strand formed with a knife;
granulating the solid strand;
feeding the granulated polymeric strand to a hopper;
passing the said granulated through an extruder barrel at an elevated temperature to melt the molten plastic;
passing the molten plastic through a braker and screen plate followed by passing from die;
extruding the molten plastic followed by providing air pressure through a mandrel;
cooling the molten plastic by the cooling rings and cutting the solidified plastic film thus formed.

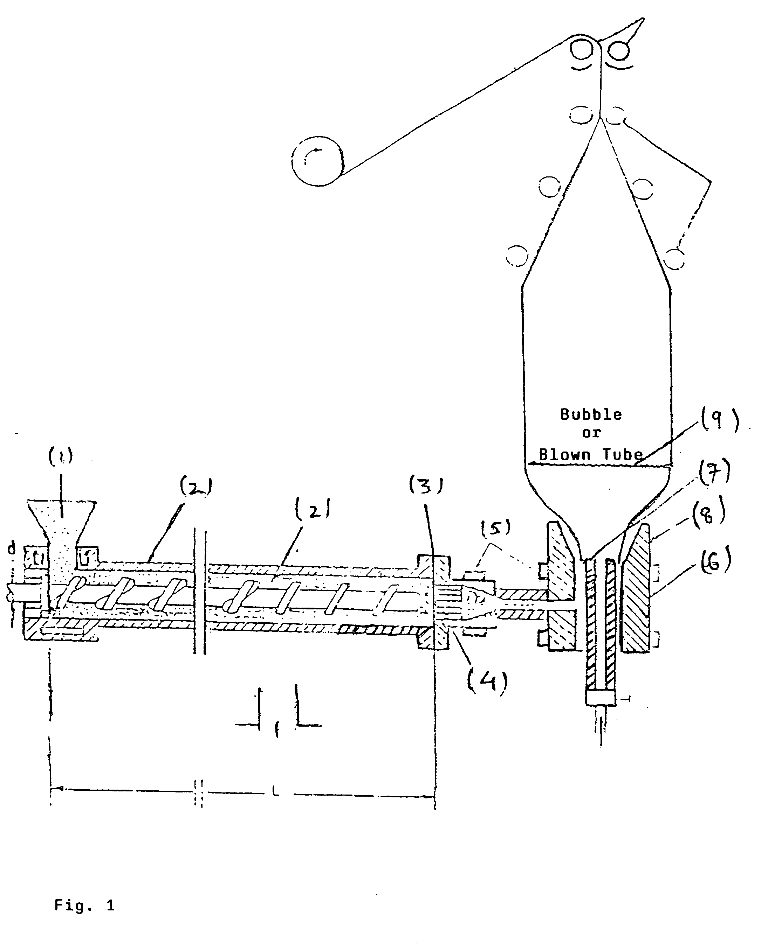

The present invention can be clearly understood with reference to the accompanying figure 1 highlighting the process steps.

The present invention relates to a novel polymeric film and the process for the preparation of the same, which comprises a combination of polysaccharides as the main component. The present invention relates to the incorporation of starch in the plastic film.Oligosaccharides have also been incorporated in the composition of the present invention which help in decreasing the degradation time of a plastic film to a maximum of 6 months.

The present invention specifies an exact formulation for the starch-based polymeric plastic film which exhibits enhanced biodegradability. The objective of the present invention is to define the development of the process for production of polysaccharide-based plastics and manufacture of films from the starch-based plastics.

The process steps for the successful manufacture of polysaccharide-based plastic comprise compounding, granulating and extrusion blowing the components of the composition and adding the additive to enhance the biodegradation of the processed plastics. The amount of starch of the processed plastic films which are used in the present composition may vary from 10-60% of the composition and the effect of varying the starch content is visibly seen in the density of the plastic film thus formed.

The content of starch is a detrimental factor in deciding the properties of the plastic film thus formed. The increase in starch content leads to a decrease in the water absorption properties, tensile properties and elongation level of the plastic film thus formed. These effects of the starch, however, are neutralized by the other components added in the composition. Therefore, it is essential that the components of the composition be present in the specific amounts to ensure that the composition thus formed exhibits the desired properties. This implies that reaching a definite composition for a specific plastic film exhibiting the desired properties, the ratio of the components has to be carefully monitored. The plastic film as formed by the process of the present invention comprises 10-60% of starch, 5-20% of a coupling agent, 20-90% of a water-insoluble synthetic polymer acting as stabilizing agent, said components adding up to 100%, and water in an amount so that the starch is moistened enough to smear itself uniformly around the granules of the stabilizing agent and the coupling agent, 20-60% of urea w/w of starch and water, and 2-10 phr of oligosaccharides.

The main objective of the present invention is to provide a novel process for the formation of the plastic films which biodegrade at a faster rate than the conventionally known plastic films where starch comprises the major component.

The process steps essentially comprise compounding the various components of the present invention followed by extrusion blowing the same. The temperature and reaction parameters as selected are based on the components and the specific ratio of each of the components.

A low density starch preferably corn starch, a stabilizing agent selected among water-insoluble synthetic polymers, preferably a low density polyethylene (LDPE), the coupling agent which is again a polymer preferably a polyethylene acrylic acid polymer or a vinyl acetate copolymer and a gelatinizing and plasticizing agent urea are mixed to prepare a granular composition. A small amount of water is added so that the starch is moistened enough to smear itself uniformly around the granules of the stabilizing agent and the coupling agent. The mixture is then compounded in a kneader with a screw rpm varying from about 10-60 at a temperature of 110°-135° C. The compounded material is then discharged in the form of a continuous strand passed through a water trough for cooling and then the same is cut with knives, preferable rotary knives, in a granulator. The granules were blown into a film on the film blowing extruder.

The compositions of the present invention are compounded to attain a uniform blending of constituents prior to extrusion blowing of films. Compounding of the blend and granulating prior to extrusion film blowing is an essential feature of the invention.

In the process for extrusion blowing of films the plastic granules are fed through a hopper at one end of a plastic extruder which consists of a screw revolving within a close fitting heated barrel. While being propelled forward the granules melt by contact with the heated walls of the barrel as well as by the heat generated by friction. The molten plastic is forced through a die which determines its final form. Prior to the die, a breaker plate supporting a screen pack is fitted to filter out any contaminating particles present in the raw material which can otherwise cause holes or breaks in the Film. The screen pack used for increasing back pressure improves mixing and homogenization of the melt. In a preferred embodiment of the process a vent hole usually in the top of the extruder barrel is incorporated in order to remove water and other volatile constituents from the extrudate before it emerges from the die. Multiscrew extruders, particularly twin-screw extruders are used in a preferred feature of the process of the present invention. The multi screw extruders as used in the present invention provide better mixing of the components of the present invention.

The molten polymer from the extruder enters the die either from the side or from the bottom and flowing round a mandrel emerges through a ring shaped die opening in the form of a tube. Extrusion of the tube is preferably upwards. The tube is expanded into thin walled bubble of the required diameter by an air pressure maintained through the center of the mandrel. The bubble pressure is maintained by pinch rolls at one end and by the die at the other. The pressure of the air is maintained constant in order to ensure uniform thickness and width of the film. Cooling is preferably achieved by blowing air against the outside surface of the bubble vide a conically shaped air cooling ring provided with air slits. The point where solidification of the extrude commences is known as the frost line. Proper air cooling and supporting with guides improve the stability of the bubble.

Some of the advantages of the blown film extrusion are better mechanical properties of the film, convenient adjusting of film width, no loss due to edge trimming, easy conversion of the film into bags and low cost of the process.

Therefore smooth and good quality films are obtained from the present process for preparing the novel compositions. The operating conditions of the film blowing extruder are carefully selected depending upon the ratio of the components used especially upon the content of the starch used and on the stabilising agents used in the present invention..

The proper melt mixing occurs over a range of temperature as optimum range where melting of all the 5 components of the composition occur is taken as the temperature. Therefore the melting does not occur at a particular temperature but at an optimum range of temperatures. The process parameter for extrusion film blowing of starch based films include a screw rpm of 44-46rpm and temperature of 120-145° C for LDPE compositions and 160-185° C for LLDPE compositions.

The components of the present composition are first physically mixed to form a mixture. This physical mixture thus formed is then compounded in a compounding machine.

The temperature range used in the compounder varies between 122-132° C. At the raised temperature melt mixing occurs leading to the formation of a strand. The strand thus formed is then cooled to a temperature below 115° C which solidifies the strand formed. The strand thus formed is then cut with the help of the rotary knives from the granulator. The polymer granulate formed by compounding the components of the present invention are fed through hopper (1). The hopper (1) here consists of a screw revolving within a close fitted heating barrel. The granulate is propelled forward in the extruder barrel (2) and during this propelling, the granules melt by contact with the heated walls of the barrel as well as by heat generated by friction. The melted polymer passes through the barrel (2). This is passed through a braker plate (3) supporting a screen pack (4) to filter out any contaminating particles present in the raw materials thereby eliminating the chances of causing holes or breaks in the film. The screen pack (4) improves mixing and homogenisation of the melt by increasing back pressure. This passes through the heaters (5) causing the polymer to reach a molten state. The molten polymer from the extruder enters the die (6) and flows around a mandrel (7) through a ring shaped die opening in the form of a tube. The bubble pressure is maintained by pinch rolls at one end and by the die at the other. The pressure of the air is maintained constant in order to ensure uniform thickness and width of the film. Cooling is preferably achieved by blowing air against the outside surface of the bubble vide a conically shaped air cooling ring (8) provided with air slits. The point where solidification of the extrude commences is known as the frost line (9). Proper air cooling and supporting with guides improve the stability of the bubble. The polymeric film thus formed is cut into the various sheets and sizes through a cutter as per the requirements of the end user.

The present invention specifies an exact formulation for the starch and oligosaccharide based polymeric plastic film which exhibits enhanced biodegradability. The objective of the present invention is to define the development of polysaccharide based plastics having a biodegradation time of about 2-6 months.

The various components of the composition forming the plastic polymeric film therefore comprises a stabilizing agent, a gelatinizing and plasticizing agent and a coupling agent besides comprising water, starch and oligosaccharides. The stabilizing agents as used in the present composition are preferably LDPE or LLDPE while coupling agents are preferably chosen from polyethylene acrylic acid, polyethylene glycol and vinyl acetate copolymer. The gelatinizing agent is urea and forms an essential component of the present composition.

The water content plays an important part in the formation of the film of the desired quality as water along with urea as gelatinizing and plasticizing agents is responsible for gelatinisation of starch which further controls the dispensability of starch into the polyethylene matrix. It is observed that below the desired level of the moisture the film becomes gritty due to incomplete gelatinisation of starch. The amount of urea present in the composition is also important as it helps in the gelatinisation and prevention of retrogradation of starch. Retrogradation of starch is responsible for making a starch containing film non-flexible, paper like and finally brittle. The role of ethylene acrylic acid copolymer coupling agent is to prevent separation of phases by compatibilizing starch with polyethylene. The ethylene moiety of the coupling agent makes the polyethylene component compatible with the former while its acrylic acid part is responsible for intimately mixing with starch macrochain. Thus by the help of the coupling agent the non polar polyethylene polymer is intimately mixed with the polar starch polymer to make the mass almost a single phase system. Therefore the amount of starch to be incorporated into polyethylene matrix depends on the content of moisture, gelatinizing and plasticizing agents and coupling agent.

The properties of the films depend on the starch contents in the composition. An increase in the amount of starch leads to a decrease in the water absorption of the film and an increase in the density. Incorporating starch decreases both the tensile strength and elongation, but the tensile strength may be maintained at about the same level of the unmodified polyethylene film by proper control of the composition. However, it is difficult to maintain the high elongation of low density polyethylene film in the starch containing films. This is due to the rigidity and very high retrogradation tendency of the starch macromolecules.

With increase of the gelatinizing and plasticizing agents content the percentage of the water soluble matter also increases. These films are therefore not suitable for moisture proof packaging. These films are suitable for various agricultural uses where degradation of films in the field condition or under soil environments is desired. The starch plastics film of this type may therefore be used in mulching and replaces the unmodified polyethylene films from such uses.

Therefore the composition of the present invention is found to be biodegradable and effective as a polymeric plastic film former. The effects of the different proportions of starch and other biodegradability inducing agents, gelatinizing agents and coupling agents on different physio-chemical properties determined as per ASTM and BS test procedures are film thickness, density, water vapour transmission rate and vapour permeability, water absorption and water soluble matter and chemical resistance to alkali and compared to LDPE product processed under similar conditions.

The tensile properties of these starch based plastic films are determined when the film is freshly made, after shelf aging of the compounded granules as well as blown films and after thermal aging of the films upon exposure to various conditions such as
(a) dry heat
(b) wet heat and
(c) humid heat.

The plastic films of the present invention are biodegradable on account of the presence of starch, making it an ecologically satisfactory mode for the disposal of plastic waste. The biodegradability of these films have actually been assessed through outdoor weathering, soil burial. The techniques of X ray diffraction, infra red spectroscopy and scanning electron microscopy (SEM) have been applied to characterize these plastics for their morphology related to the biodegradability.

The incorporation of oligosaccharides in the composition further enhances the rate of biodegradability of the polymeric plastic films. The rate of biodegradability of the polymeric plastic films to an extent where the composition degrades within 2-6 months of burial in the top soil with availability of water for precipitation and oxygen from soil atmosphere. SEM of the films subjected to soil burial to facilitate biodegradation for 4 months show the presence of more voids and fractured surface than films under soil burial after 2 months.

The process and the composition of the present invention can be clearly understood from the following examples which are illustrative of the present invention.

### Example 1

An improved ecologically safe plastic film and process for the same comprising 10% starch, 80% LDPE, 10% coupling agent, 4 phr urea and the total water content of 12.5 phr in the present composition and 4 phr of an oligosaccharide,by mixing the components of the composition; compounding the mixture in a compounder to form a molten strand; solidyfing the said molten strand by decreasing the temperature; cutting the said solid strand formed with a knife; granulating the solid strand; feeding the granulated polymeric strand to a hopper; passing the said granulated through an extruder barrel at an elevated temperature to melt the molten plastic; passing the molten plastic through a braker and screen plate followed by passing from die; extruding the molten plastic followed by providing air pressure through a mandrel; and then cooling the molten plastic by the cooling rings and cutting the solidified plastic film thus formed.

### Example 2

An improved ecologically safe plastic film and process for the same comprising 40% starch, 40% LDPE acting as stabilising agent, 20% coupling agent, 12 phr urea and 20 phr water and 5 phr of a disaccharide by mixing the components of the composition; compounding the mixture in a compounder to form a molten strand; solidyfing the said molten strand by decreasing the temperature; cutting the said solid strand formed with a knife; granulating the solid strand; feeding the granulated polymeric strand to a hopper; passing the said granulated through an extruder barrel at an elevated temperature to melt the molten plastic; passing the molten plastic through a braker and screen plate followed by passing from die; extruding the molten plastic followed by providing air pressure through a mandrel; and then cooling the molten plastic by the cooling rings and cutting the solidified plastic film thus formed.

The raw material is available in abundance in nature. Hence, it is very cost effective. The subject plastic film is eco-friendly . It has got the biodegradable quality having quicker degrading rate. The biodegradability is on account of the presence of starch, making it an ecologically satisfactory mode for the disposal of plastic waste.

## Claims

1. A polymeric plastic film comprising 10-60% starch, 5-20% of a coupling agent, 20-90% of a stabilizing agent which is selected among the class of water-insoluble synthetic polymers, said components adding up to 100%, water in an amount so that the starch is moistened enough to smear itself uniformly around the granules of the stabilizing agent and the coupling agent, and 20-60% of urea w/w of starch and water, and 2-10 phr of oligosaccharides.

2. The polymeric plastic film according to claim 1, wherein the said starch is produced from grains such as corn or maize, wheat, rice, milo or sorghum and from roots and tubers such as cassava or tapioca, potato or sweet potato.

3. The polymeric plastic film according to claim 1, wherein the stabilizing agent is selected from LDPE and LLDPE.

4. The polymeric plastic film according to claim 1, wherein the said coupling agent is selected from polyethylene acrylic acid, polyethylene glycol and vinyl acetate copolymer.

5. A process for the preparation of the polymeric plastic film according to anyone of claims 1 to 4 comprising:
mixing the components of the composition;
compounding the mixture in a compounder to form a molten strand;
solidifying the said molten strand by decreasing the temperature;
cutting the said solid strand formed with a knife;
granulating the solid strand;
feeding the granulated polymeric strand to a hopper;
passing the said granulate through an extruder barrel at an elevated temperature to melt the molten plastic;
passing the molten plastic through a breaker and screen plate followed by passing from die;
extruding the molten plastic followed by providing air pressure through a mandrel;
cooling the molten plastic by the cooling rings and cutting the solidified plastic film thus formed.

6. The process for the preparation of a polymeric plastic film according to claim 5, wherein the said compounding is done in the compounding machine at a screw rpm of 10-60 and at a temperature of 110°-135°C.

7. The process for the preparation of a polymeric plastic film according to claim 6, wherein the said solidification of the molten strand is done by decreasing the temperature below 115°C.

8. The process for the preparation of a polymeric plastic film according to claim 5, wherein the said cutting of solid strand is done preferably by a rotary knife.

9. The process for the preparation of a polymeric plastic film according to claim 5, wherein said extruding is done at a temperature range of 120°-145°C for LDPE compositions and 160°-185°C for LLDPE compositions.

## Patentansprüche

1. Polymere Kunststofffolie, die 10-60 **%** Stärke, 5-20 % eines Kupplungsmittels, 20-90 % eines Stabilisators, ausgewählt aus der Klasse der wasserunlöslichen synthetischen Polymere, wobei diesen Komponenten auf 100 % zugesetzt werden, Wasser in einer Menge, durch die die Stärke ausreichend befeuchtet wird, um das Granulat des Stabilisators und des Kupplungsmittels gleichmäßig zu überziehen, und 20-60 % Harnstoff, bezogen auf das Gewicht von Stärke und Wasser, und 2-10 % Oligosaccharide umfasst.

2. Kunststofffolie nach Anspruch 1, bei der die Stärke aus Körnern, wie z.B. von Mais, Weizen, Reis, Sorghum und aus Wurzeln und Knollen, wie z.B. von Maniok oder Maniokstärke, Kartoffeln oder Süßkartoffeln erzeugt wird.

3. Kunststofffolie nach Anspruch 1, bei der der Stabilisator unter LDPE und LLDPE ausgewählt wird.

4. Kunststofffolie nach Anspruch 1, bei der das Kupplungsmittel unter Polyethylenacrylsäure und Polyethylenglycol-Vinylacetat-Copolymer ausgewählt wird.

5. Verfahren zur Herstellung der Kunststofffolie nach einem der Ansprüche 1 bis 4, das folgende Stufen umfasst:
Mischen der Komponenten des Gemisches,
Compoundieren der Mischung in einem Compounder zur Bildung eines geschmolzenen Stranges,
Erstarrenlassen des geschmolzenen Stranges durch Temperaturverminderung,
Zerschneiden des gebildeten erstarrten Stranges mit Hilfe eines Messers,
Granulierung des erstarrten Stranges,
Zufuhr des granulierten Polymerstranges zu einem Beschickungstrichter,
Transport des Granulats durch ein Extrudergehäuse bei erhöhter Temperatur, um den geschmolzenen Kuststoff aufzuschmelzen,
Transport des geschmolzenen Kunststoffs durch einen Brecher und eine Siebplatte unter nachfolgendem Transport durch das Mundstück,
Extrudieren des geschmolzenen Kunststoffs unter nachfolgender Zufuhr von Druckluft durch einen Dorn und
Abkühlung des geschmolzenen Kunststoffs mit Hilfe von Kühlringen und Zerschneiden der so gebildeten erstarrten Kunststofffolie.

6. Verfahren zur Herstellung einer Kunststofffolie nach Anspruch 5, bei dem die Compoundierung in der Compoundermaschine bei einer Drehzahl der Schnecke von 10-60 U/min und bei einer Temperatur von 110-135°C durchgeführt wird.

7. Verfahren zur Herstellung einer Kunststofffolie nach Anspruch 6, bei dem das Erstarrenlassen des geschmolzenen Stranges durch Absenken der Temperatur auf unter 115°C erfolgt.

8. Verfahren zur Herstellung einer Kunststofffolie nach Anspruch 5, bei dem das Zerschneiden des erstarrten Stranges vorzugsweise mit Hilfe eines rotierenden Messers erfolgt.

9. Verfahren zur Herstellung einer Kunststofffolie nach Anspruch 5, bei dem das Extrudieren in einem Temperaturbereich von 120-145°C für LDPE-Gemische und von 160-185°C für LLDPE-Gemische erfolgt.

## Revendications

1. Feuille en matière plastique polymère comprenant de 10 à 60% d'amidon, de 5 à 20 % d'un agent de pontage, de 20 à 90 % d'un agent stabilisateur qui est sélectionné dans la classe des polymères synthétiques insolubles dans l'eau, lesdits composants s'ajoutant jusqu'à 100 %, de l'eau dans une quantité telle que l'amidon soit suffisamment mouillé pour s'appliquer lui-même uniformément autour des granules de l'agent stabilisateur et de l'agent de pontage, et de 20 à 60 % d'urée m/m d'amidon et d'eau, et de 2 à 10 parties par centaine de résine d'oligosaccharides.

2. Feuille en matière plastique polymère selon la revendication 1, dans laquelle ledit amidon est produit à partir de grains tels que du maïs, du blé, du riz, du sorgho et à partir de racines et de tubercules telles que le cassava, le manioc, la pomme de terre ou la patate douce.

3. Feuille en matière plastique polymère selon la revendication 1, dans laquelle l'agent stabilisateur est sélectionné parmi le LDPE et le LLDPE.

4. Feuille en matière plastique polymère selon la revendication 1, dans laquelle ledit agent de pontage est sélectionné parmi l'acide acrylique polyéthylénique, le glycol polyéthylénique et le copolymère d'acétate de vinyle.

5. Procédé pour la préparation de la feuille en matière plastique polymère selon l'une quelconque des revendications 1à 4, comprenant le fait de :
mélanger les composants de la composition ;
préparer le mélange dans une mélangeuse pour former un cordon fendu ;
solidifier ledit cordon fendu en abaissant la température ;
couper ledit cordon solide formé avec un couteau ;
broyer le cordon solide en granulé ;
charger le cordon polymère en granulé dans une trémie ;
passer ledit granulé dans un cylindre d'extrudeuse à une température élevée pour fondre le plastique fondu :
passer le plastique fondu dans un concasseur et une tôle de criblage suivi d'un passage dans une filière ;
extruder le plastique fondu et appliquer ensuite une pression d'air à travers le mandrin ;
refroidir le plastique fondu par les anneaux de refroidissement et couper le film en matière plastique solidifié ainsi formé.

6. Procédé pour la préparation d'une feuille en matière plastique polymère selon la revendication 5, dans lequel ladite préparation du mélange est faite dans la mélangeuse à une vitesse de vis de 10 à 60 tr/min et à une température de 110°C à 135°C.

7. Procédé pour la préparation d'une feuille en matière plastique polymère selon la revendication 6, dans lequel ladite solidification du cordon fondu est faite en abaissant la température au-dessous de 115°C.

8. Procédé pour la préparation d'une feuille en matière plastique polymère selon la revendication 5, dans lequel ledit découpage du cordon solide est fait de préférence par un couteau rotatif.

9. Procédé pour la préparation d'une feuille en matière plastique polymère selon la revendication 5, dans lequel ladite extrusion est faite dans une gamme de température de 120°C à 145°C pour des compositions LDPE et de 160° à 185°C pour des compositions LLDPE.
